(19) Europäisches Patentamt
European Patent Office
Office européen des brevets

(11) **EP 3 926 102 B1**

(12) **EUROPEAN PATENT SPECIFICATION**

(45) Date of publication and mention
of the grant of the patent:
**06.08.2025 Bulletin 2025/32**

(21) Application number: **21179683.4**

(22) Date of filing: **16.06.2021**

(51) International Patent Classification (IPC):
*E02F 3/36* (2006.01)   *E02F 9/10* (2006.01)
*E02F 9/12* (2006.01)   *B62D 49/08* (2006.01)
*B62D 55/116* (2006.01)

(52) Cooperative Patent Classification (CPC):
**E02F 9/10; B62D 49/08; B62D 55/116; E02F 3/36; E02F 9/12**

(54) **WORK VEHICLE PROVIDED WITH AN ANTIROLLOVER SYSTEM**

ARBEITSFAHRZEUG MIT EINEM SYSTEM ZUR VERHINDERUNG DES UMKIPPENS

VÉHICULE DE TRAVAIL AVEC SYSTÈME D'ÉVITER LE BASCULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2020 IT 202000014374**

(43) Date of publication of application:
**22.12.2021 Bulletin 2021/51**

(73) Proprietor: **CNH Industrial Italia S.p.A.
10156 Torino (IT)**

(72) Inventors:
• **LOPREVITE, Mauro
  CAP 10099 San Mauro Torinese (TO) (IT)**
• **RUSSO, Francesca
  10153 Torino (TO) (IT)**

(74) Representative: **CNH Industrial IP Department
Leon Claeysstraat 3A
8210 Zedelgem (BE)**

(56) References cited:
EP-A1- 3 345 858    IT-A1- AN20 120 027
LU-A1- 37 001    US-A- 3 160 284
US-A- 4 679 803    US-A1- 2017 089 797

**Description**

TECHNICAL FIELD

The present invention concerns a work vehicle, in particular an earth-moving machine, provided with a main body movable with respect to the carriage of the vehicle.

BACKGROUND OF THE INVENTION

Work vehicles such as earth moving machines usually comprises a main body that is turnable with respect to an undercarriage. Such undercarriage is provided with wheels or crawlers to allow the motion of the work vehicle on the ground and the main body defines a cab for the operator and carries the engine and the hydraulic arrangements to operate different work tools of the work vehicle such as booms, backs, blades etc.

Such main body is normally turnable with respect to the undercarriage via a so-called screw ring assembly that allows the movement of the main body with respect to the undercarriage and, at the same time, the passage of different hydraulic conduits, electrical or mechanical wires.

In view of the above-defined arrangement, it is clear that the center of gravity of the work vehicle is normally placed in the main body, i.e. in an elevated position with respect to the ground.

Furthermore, earth-moving machines usually displace on rough, inclined and slip grounds. In such conditions, in view of the mentioned elevated center of gravity, there is a high probability of a so-called rollover of the vehicle, i.e. a turning movement that makes the vehicle roll on its lateral side. Such phenomenon is clearly dangerous for the driver of the vehicle, for any person/object in the neighborhood of the vehicle.

Moreover, the rollover of the vehicle creates damages on the vehicle that involves high reparation costs and high costs for straighten up the vehicle.

Accordingly, such rollover problem is widely known in the art. Examples of solutions to such problems have been provided in published documents US20190359267 A1, DE9319382 U1, ITAN20120027, US3160284A, US4679803, LU37001A1 and US2017/089797A1.

However, the solutions shown in the aforementioned documents are complex and inclined to damages in view of the dirty work environment into which such work vehicles are used.

Therefore, the need is felt to provide a work vehicle configured to avoid the rollover of the vehicle in some operative conditions and that is at the same time compact, economic and robust.

An aim of the present invention is to satisfy the above mentioned needs in a cost effective and optimized way.

SUMMARY OF THE INVENTION

The aforementioned aim is reached by a work vehicle provided by an anti-rollover system as claimed in the appended independent claims.

Preferred embodiments of the invention are realized according to the claims dependent or related to the above independent claims.

BRIEF DESCRIPTION OF DRAWINGS

For a better understanding of the present invention, a preferred embodiment is described in the following, by way of a non-limiting example, with reference to the attached drawings wherein:

- Figure 1 is a rear schematic view of a work vehicle comprising an anti-rollover system according to the invention in a first operational condition;
- Figure 2 is a rear schematic view of a work vehicle comprising an anti-rollover system according to the invention in a second operational condition;
- Figure 3 is a perspective view of a portion of the work vehicle comprising an anti-rollover system according to the invention; and
- Figure 4 is an enlarged perspective view of a portion of figure 3.

DETAILED DESCRIPTION OF THE INVENTION

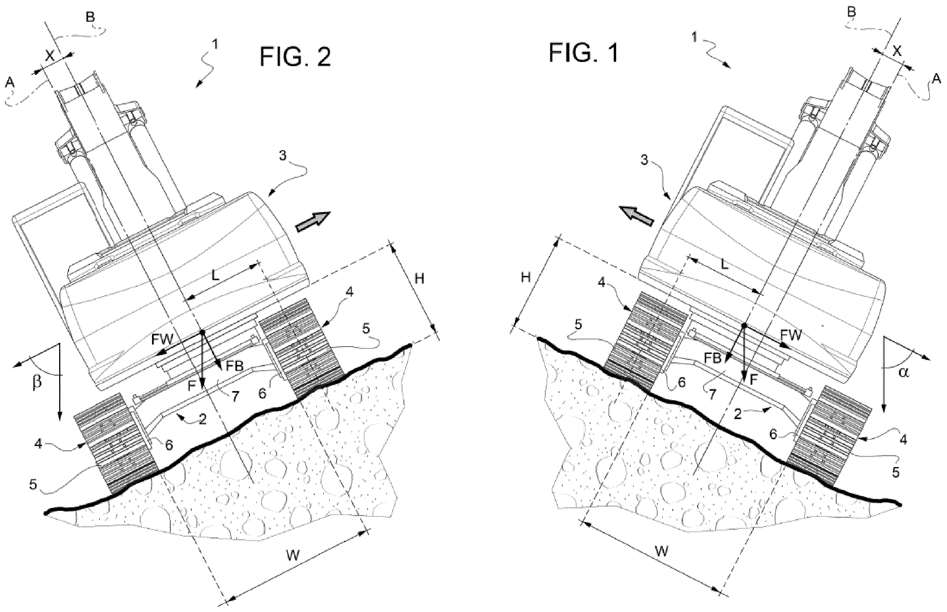

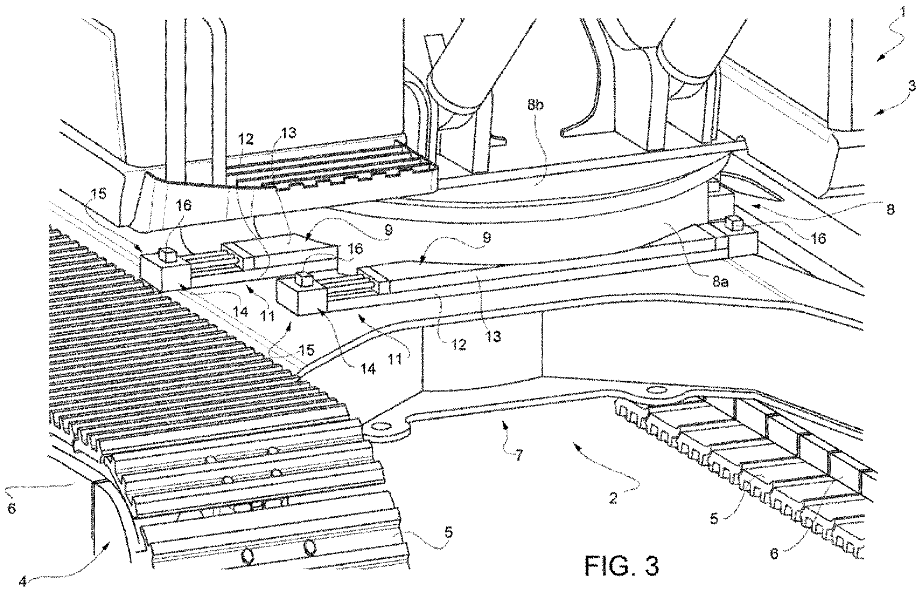

As shown in figure 1, 2 and partially in figure 3, reference number 1 indicates generally a work vehicle such as an earth moving machined, in the disclosed example a scraper, comprising an undercarriage 2 and a main body 3.

The undercarriage 2 is provided with ground contact means 4 configured to allow the movement of the undercarriage 2,and consequently of main body 3, with respect to the ground. In the disclosed example, ground contact means 4 comprises crawlers 5.

The main body 3 may define a plurality of elements, such as a cab, booms, blades etc., but they will be not described for sake of brevity and not linked to the present invention.

As per se known, the undercarriage 2 comprises a pair of side members 6 extending longitudinally to define a proper support to ground contact means 4 and spaced of a pre-set width W with respect to each other. Advantageously such pre-set width is fixed.

The two side members 6 are connected via an intermediate portion 7 and, preferably, the two side members 6 and the intermediate portion 7 are realized as one piece.

The shape of the intermediate portion 7 is generally symmetrical with respect to a transversal plane A passing in the middle of the width W, i.e. equally spaced with respect to side members 6.

The main body 3 is carried by the undercarriage 2 in a movable manner, in particular in a rotatable manner thanks to a so-called screw-ring assembly 8 configured to allow the rotation of the main body 3 with respect to an axis of rotation B perpendicular to the undercarriage 2, i.e. to the ground.

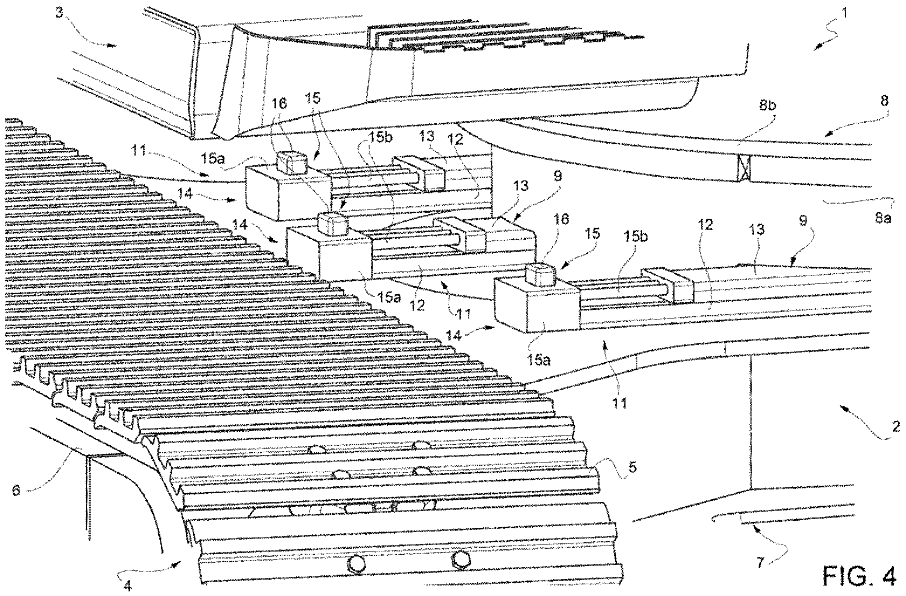

Essentially, as shown in figures 3 and 4, the screw-ring assembly 8 comprises a lower portion 8a coupled to the undercarriage and an upper portion 8b coupled to the main body 3. Such lower and upper portions 8a, 8b are configured to be axially in contact each other while allowing a relative rotation between themselves.

As per se known, and not described in further detail for sake of brevity, the lower and upper portions 8a, 8b defines a passage for hydraulic, electric and /or mechanical cables between the main body 3 and the undercarriage 2.

According to the present invention, the lower portion 8a of screw-ring assembly 8 is carried in a movable manner with respect to the undercarriage 2, in particular, the lower portion 8a is configured to move linearly along a direction perpendicular to axis B and to longitudinal axis of side members 6. In other words, thanks to the movement of the lower portion 8b, the screw-ring assembly 8 can move along the width W between the side members 6, i.e. may vary the position of rotation axis B with respect to symmetry plane A.

In particular, the lower portion 8a defines at least two linear seats 9 faced towards the intermediate portion 7 of the undercarriage 2 and configured to house a portion of a linear guide assembly 11 axially interposed between the screw-ring assembly 8 and the intermediate portion 7 of the undercarriage 2, as described below.

According to the described embodiment, the lower portion 8a defines three linear seats 9, namely a central seat placed in correspondence of a transversal symmetry plane of the intermediate portion 7 and a pair of lateral seats spaced apart along an axis parallel to longitudinal axis of side member 6.

As said, on a corresponding location on the intermediate portion 7 of the undercarriage 2 of each seat 9, the work vehicle 1 comprises respective linear guide assemblies 11 each provided with a guide 12 and a cart 13 configured to slide over such guide 12.

Each cart 13 has a shape configured to mate with the corresponding seat 9; in the disclosed example the carts 13 are parallelepiped and therefore the seats 9 are rectangular cross-sections grooves realized on the circular bottom surface of the lower portion 8a of the screw-ring assembly.

Furthermore, each cart 13 together with the respective seat define a mechanical coupling so that the lower portion 8a of the screw-ring assembly 8 is joint to the carts 13 and, accordingly, the lower portion 8a moves according to the movement of carts 13. Such mechanical coupling may be achieved in different ways, e.g. by fixing via welding.

Guide 12 may be realized of any shape or cross-section configured to mechanically cooperate with the respective cart 13 and are fixed to the intermediate portion 2 of the undercarriage 2 in different ways, e.g. by fixing via threaded elements or by press-fitting or welding.

In particular, it is furthermore noticed that the central linear guide assembly 11 extends along width W more than the lateral linear guide assemblies 11 to allow an equal movement of the lower portion 8a of the screw-ring assembly 8 that has a circular portion.

The screw-ring assembly 8 is moved along intermediate portion 7 of the undercarriage 2 via actuator means 14 configured to impart a force on the screw-ring assembly 8 to allow its motion thanks to linear guide assembly.

According to the above defined configuration, the actuator means 14 are configured to impart a force to the carts 13 to allow its sliding over the respective guides 12. Each cart 13 is coupled to the respective guide 12 advantageously via a recirculating sphere system, not shown in particular detail.

Advantageously, the mentioned actuator means 14 comprises a hydraulic cylinder, in particular a double acting hydraulic cylinder 15 provided with a casing 15a. fixed to the intermediate portion 7 of the undercarriage 2 at an extremity of a respective guide 12, and at least a stem 16b comprising a extremity portion housed inside the casing 15a and cooperating with the hydraulic fluid, as known, and an opposite extremity fixed to the respective cart 13.

In particular, in the disclosed embodiment, the double acting hydraulic cylinder 15 is a compact double acting hydraulic cylinder comprising a single casing 15a and a plurality of stems 15b, e.g. three stem for each cylinder 15.

Such hydraulic cylinder 15 are fluidly connected to a pressurized hydraulic circuit of the work vehicle, e.g. to an oil pressurized system that can be provided with a dedicated accumulator to guarantee the oil flow to all hydraulic cylinders 15.

More preferably, the work vehicle 1 comprises actuator means 14 on both sides with respect to longitudinal plane A of the screw-ring assembly 8 along width W, i.e. each side of a cart 13 is coupled to a respective actuator means 14 may act singularly to actuate the cart 13, therefore providing a safety redundancy, or together, in case of very heavy main body 3 in order to provide concurrent forces that acts to move carts 13.

According to the disclosed configuration, the work vehicle 1 therefore comprises right and left cylinders fixed at both extremities of a respective guide provided with stems 15b coupled to a respective extremity of a related cart 13.

The work vehicle 1 further comprises sensor means 16 configured to detect the inclination of the ground on which the work vehicle 1 is moving, i.e. the angle $\alpha$, $\beta$ of inclination of the ground with respect to a vertical axis, as shown in figures 1 and 2. Such sensors means may comprise an inclinometer, for instance.

The work vehicle 1 further comprises an electronic unit, not shown, comprising elaboration means configured to acquire the data related to inclination on the ground of work vehicle 1 detected by sensor means 16, elaborate this latter and control consequently actuator means 14 to move the screw-ring assembly 8 with respect to the intermediate portion 7 of the undercarriage 2.

Work vehicle 1 may further comprises weight means, such as load sensors, configured to acquire data related to the weight of the work vehicle 1 and configured to communicate with electronic unit. This latter is configured to elaborate the gravity center position of the work vehicle as described below.

The operation of the work vehicle provided with an anti-rollover system according to the invention and described as above is the following.

Assuming that the work vehicle 1 is in the condition shown in figure 1, i.e. running on a ground inclined of an angle α with respect to a vertical axis, the sensors means will detect such angle α that is acquired by electronic unit. This latter will compare angle α with respect to a preset memorized threshold angle of inclination or with respect to a calculated threshold angle.

Notwithstanding the way by which the threshold angle is acquired, if:

- angle α, β is lower with respect to threshold angle of inclination, actuator means 14 are not actuated;

- angle α, β is greater with respect to threshold angle of inclination, actuator means 14 are control to move the screw ring assembly 8 with respect to intermediate portion 7 of the undercarriage 2 to modify the center of gravity of the work vehicle 1 to avoid a rollover of the latter.

In particular, the control of actuator means 14 means to allow fluid in pressure to pass into housing 15b of hydraulic cylinders 15 and move consequently the stems 15b. In the example of figure 1, right hydraulic cylinders 15 are actuated to extend their stem 15b while left hydraulic cylinders 15 are controlled to allow the movement of their stem 15b inside the respective housing 15a.

In this way, the rotation axis B of the main body 3 is displaced with respect to the symmetry plane A of an elaborated distance X, thereby modifying the position of the center of gravity on the vehicle.

The elaborated distance X may be calculated thanks to known equilibrium torque equations that must satisfy the following mathematical relationship:

$$F_W * H \leq F_B * L$$

Wherein:

- $F_W$ is the component of the weight force F of the work vehicle 1 acting on the center of gravity along W direction;

- $F_B$ is the component of the weight force F of the work vehicle 1 acting on the center of gravity along B axis direction;

- L is the distance between the point of application of force $F_B$ and a ground contact point of ground contact means 4; and

- H is the distance between the point of application of force $F_W$ and the ground.

In view of the weight of the vehicle 1, that can be memorized or acquired via dedicated sensor means and the shape of the work vehicle, memorized into electronic unit, the gravity center, i.e. the weight force application point, can be easily determined.

Then, in view of the inclination of the work vehicle 1, a critical distance L (i.e. a critical angle) can be determined. When such angle is overcome, electronic unit can calculate a distance X able to vary the center of gravity of work vehicle so as to modify the distance L and thereby satisfy the above mathematical condition.

According to the above, the present invention clearly further refers to a method for avoiding the rollover of a work vehicle as defined above and comprising the following steps:

- Acquire data related to the position of the center of gravity of the work vehicle;
- Acquire data related to the inclination of the work vehicle 1 with respect to a vertical axis;
- Compare the acquired inclination angle with respect to a threshold angle;
- If the acquired inclination angle is lower with respect to the threshold angle, the actuator means 14 are not activated;
- If the acquired inclination angle is greater with respect to the threshold angle, the actuator means 14 are activated to modify the position of the swivel ring assembly 8 with respect to the intermediate portion 7 of the undercarriage 2 along its width direction W of a quantity sufficient to avoid rollover of the work vehicle.

In particular, the center of gravity position may be calculated in function of the shape and the current weight of the work vehicle 1 or may be memorized as fixed value in the electronic unit.

Furthermore, the threshold angle may be memorized in function of the typology of work vehicle 1 or can be calculated in function of the current center of gravity position of the vehicle.

All the aforementioned steps of the above method may be memorized and executed by an electronic unit as defined in the preceding.

In view of the foregoing, the advantages of work vehicle 1 provided with an anti-rollover system according to the invention are apparent.

Thanks to the proposed linear guide assembly 11 configured to allow the motion of the screwing assembly 8 along width direction W on the intermediate portion of the undercarriage 2, it is possible to vary the position of center of gravity of the work vehicle 1 thereby avoiding the rollover phenomenon.

Furthermore, since the undercarriage has a fixed width and only the screw-ring assembly moves with respect to its intermediate portion, the proposed system is robust and less sensible to dirty elements with respect to the one known in the prior art.

Moreover, the proposed use of a recirculating spheres guide allows a minimal friction displacement of the screw ring assembly 1 with respect to undercarriage 2, allowing a quick and inexpensive movement of all main body 3 with simple, compact and cost-effective actuator means 14.

The use of actuator means 14 of hydraulic typology allows the integration of the latter with other hydraulic circuit of the work vehicle 1, thereby allowing a facilitated installation and control of the latter.

The doubling of such actuator means 14, realized as double acting cylinders 15, on both sides of rotation axis B with respect to screw ring assembly allows both a redundancy for safety reasons and the possibility of generating concurrent forces to move the screw-ring assembly 8.

It is clear that modifications can be made to the described work vehicle 1 provided with an anti-rollover system which do not extend beyond the scope of protection defined by the claims.

For example, it is clear that actuator means 14 may be electromechanical means and that the number and disposition of such actuator means 14 to vary the position of the screw-ring assembly may be varied according to the typology of work vehicle 1.

Furthermore, it is clear that the control strategy of the actuator means 14 may be varied accordingly the different use condition of the work vehicle.

Clearly, the exemplarily shapes and number of the elements described and shown in the figures according to the typology of work vehicle 1.

**Claims**

1. Work vehicle (1) comprising an undercarriage (2) movable with respect to the ground thanks to ground contact means (4) and a main body (3) carried in a movable manner by said undercarriage (2),

    said undercarriage comprising a pair of side members (6) and an intermediate portion (7) connecting said side members (6), said side members (6) being equally spaced along a width direction (W) with respect to a longitudinal plane (A) of said work vehicle (1),

    said work vehicle (1) comprising a screw-ring assembly (8) configured to allow a rotation of said main body (3) with respect to said undercarriage (2) about an axis (B),

    said work vehicle (1) comprising a linear guide assembly (11) axially interposed between said screw-ring assembly (8) and said intermediate portion (7) of said undercarriage and actuator means (14) configured to exert a force directed to said screw-ring assembly (8) so that said screw-ring assembly (8) is carried in a linear movable manner with respect to said undercarriage (2) along said width direction (W) in order to vary the location of said axis (B) with respect to said plane (A) along the width direction (W), wherein said linear guide assembly (11) comprises at least a guide (12) and a corresponding cart (13), said guide (12) being fixedly carried by said intermediate portion (7) and defining a linear path along said width direction (W), said cart (13) being fixedly carried by a lower portion (8a) of said screw-ring assembly (8) and configured to move along said guide (12),

    the work vehicle is **characterized in that** it further comprises a plurality of guides (12) and corresponding carts (13), said carts (13) being housed and fixed in corresponding seats (9) realized in said lower portion (8a) of said screw-ring assembly (8).

2. Work vehicle according to claim 1, wherein said cart (13) is coupled to the respective guide (12) via a recirculating sphere system.

3. Work vehicle according to any of the previous claims, wherein said actuator means (14) exert their force on said cart (13).

4. Work vehicle according to any of the previous claims, wherein said actuator means (14) comprises hydraulic actuator means.

5. Work vehicle according to any of the previous claims, wherein said actuator means (14) comprises double action hydraulic cylinder (15).

6. Work vehicle according to claim 5, wherein said double action hydraulic cylinder (15) comprises a plurality of stems (15b) acting on a single cart (13).

7. Work vehicle according to any of the preceding claims, comprising actuator means (14) on both sides of said screw-ring assembly (8) with respect to said longitudinal plane (A).

8. Work vehicle according to any of the preceding claims comprising sensor means (16) configured to detect data related to an inclination of said work vehicle (1) with respect to a vertical axis and an electronic unit comprising elaboration means configured to acquire said inclination data, elaborate the latter and control said actuator means (14) on the base of such elaboration inclination data.

9. Work vehicle according to claim 8 comprising sensor means configured to detect data related to the weight of said work vehicle (1) said electronic unit being configured to elaborate the position of the center of gravity of said work vehicle (1) in function of a memorized shape of said work vehicle (1) and said data related to its weight.

10. Method for avoiding the rollover of a work vehicle (1) according to claim 9 or 10 comprising the following steps:

    • Acquire data related to the position of the center of gravity of sais work vehicle (1);
    • Acquire data related to the inclination of said work vehicle (1) with respect to a vertical axis;
    • Compare the acquired inclination angle with respect to a threshold angle;
    • If the acquired inclination angle is lower with respect to the threshold angle, the actuator means (14) are not activated;
    • If the acquired inclination angle is greater with respect to the threshold angle, the actuator means (14) are controlled by said electronic unit to modify the position of said swivel ring assembly (8) with respect to said intermediate portion (7) of said undercarriage (2) along its width direction (W) of a quantity sufficient to avoid rollover of said work vehicle (1).

11. Method according to claim 10, wherein said center of gravity position is memorized as fixed value in the electronic unit.

12. Method according to claim 10 when depending on claim 11, wherein said center of gravity position is elaborated in function of a memorized shape of said work vehicle (1) and said data related to its weight.

13. Method according to claims 10 to 12 wherein said threshold angle is memorized in said electronic unit or is calculated in function of the current center of gravity position of the vehicle.

**Patentansprüche**

1. Arbeitsfahrzeug (1) mit einem Fahrgestell (2), das mittels Bodenkontaktmitteln (4) relativ zum Boden beweglich ist, und einem von dem Fahrgestell (2) beweglich getragenen Hauptkörper (3),

   wobei das Fahrgestell ein Paar von Seitenholmen (6) und einen diese verbindenden Zwischenabschnitt (7) aufweist, wobei die Seitenholme (6) entlang einer Breitenrichtung (W) gleichmäßig zu einer Längsebene (A) des Arbeitsfahrzeugs (1) beabstandet sind,
   wobei das Arbeitsfahrzeug (1) eine Schraubringanordnung (8) aufweist, die dazu eingerichtet ist, eine Drehung des Hauptkörpers (3) relativ zum Fahrgestell (2) um eine Achse (B) zu ermöglichen,
   wobei das Arbeitsfahrzeug (1) eine Linearschienenanordnung (11), die axial zwischen der Schraubringanordnung (8) und dem Zwischenabschnitt (7) des Fahrgestells angeordnet ist, sowie Betätigungsmittel (14) aufweist, die dazu eingerichtet sind, eine Kraft auf die Schraubringanordnung (8) auszuüben, sodass diese linear relativ zum Fahrgestell (2) entlang der Breitenrichtung (W) beweglich getragen ist, um die Lage der Achse (B) relativ zur Ebene (A) entlang der Breitenrichtung (W) zu verändern, wobei die Linearschienenanordnung (11) mindestens eine Führung (12) und einen zugehörigen Schlitten (13) aufweist, wobei die Führung (12) fest an dem Zwischenabschnitt (7) getragen ist und eine lineare Bahn entlang der Breitenrichtung (W) definiert, wobei der Schlitten (13) fest an einem unteren Abschnitt (8a) der Schraubringanordnung (8) getragen und dazu eingerichtet ist, sich entlang der Führung (12) zu bewegen, **dadurch gekennzeichnet, dass**
   das Arbeitsfahrzeug des Weiteren eine Mehrzahl von Führungen (12) und zugehörigen Schlitten (13) aufweist, wobei die Schlitten (13) in entsprechenden Sitzen (9) untergebracht und fixiert sind, die in dem unteren Abschnitt (8a) der Schraubringanordnung (8) ausgebildet sind.

2. Arbeitsfahrzeug nach Anspruch 1, wobei der Schlitten (13) über ein Kugelumlaufsystem mit der jeweiligen Führung (12) gekoppelt ist.

3. Arbeitsfahrzeug nach einem der vorhergehenden Ansprüche, wobei die Betätigungsmittel (14) ihre Kraft auf den Schlitten (13) ausüben.

4. Arbeitsfahrzeug nach einem der vorhergehenden Ansprüche, wobei die Betätigungsmittel (14) hydraulische Betätigungsmittel aufweisen.

5. Arbeitsfahrzeug nach einem der vorhergehenden Ansprüche, wobei die Betätigungsmittel (14) einen doppeltwirkenden Hydraulikzylinder (15) aufweisen.

**6.** Arbeitsfahrzeug nach Anspruch 5, wobei der doppeltwirkende Hydraulikzylinder (15) eine Mehrzahl von Stangen (15b) aufweist, die auf einen einzelnen Schlitten (13) einwirken.

**7.** Arbeitsfahrzeug nach einem der vorhergehenden Ansprüche, das Betätigungsmittel (14) auf beiden Seiten der Schraubringanordnung (8) in Bezug auf die Längsebene (A) aufweist.

**8.** Arbeitsfahrzeug nach einem der vorhergehenden Ansprüche, das Sensormittel (16), die dazu eingerichtet sind, Daten bezüglich einer Neigung des Arbeitsfahrzeugs (1) relativ zu einer Vertikalachse zu erfassen, und eine elektronische Einheit mit Verarbeitungseinrichtungen aufweist, die dazu eingerichtet sind, die Neigungsdaten zu erfassen, diese zu verarbeiten und die Betätigungsmittel (14) basierend auf den verarbeiteten Neigungsdaten zu steuern.

**9.** Arbeitsfahrzeug nach Anspruch 8, das Sensormittel aufweist, die dazu eingerichtet sind, Daten bezüglich des Gewichts des Arbeitsfahrzeugs (1) zu erfassen, wobei die elektronische Einheit dazu eingerichtet ist, die Lage des Schwerpunkts des Arbeitsfahrzeugs (1) in Abhängigkeit von einer gespeicherten Form des Arbeitsfahrzeugs (1) und den Daten bezüglich seines Gewichts zu verarbeiten.

**10.** Verfahren zum Verhindern des Umkippens eines Arbeitsfahrzeugs (1) nach Anspruch 9 oder 10, das die folgenden Schritte aufweist:

• Erfassen von Daten bezüglich der Lage des Schwerpunkts des Arbeitsfahrzeugs (1);
• Erfassen von Daten bezüglich der Neigung des Arbeitsfahrzeugs (1) relativ zu einer Vertikalachse;
• Vergleichen des erfassten Neigungswinkels mit einem Schwellenwinkel;
• falls der erfasste Neigungswinkel kleiner als der Schwellenwinkel ist, werden die Betätigungsmittel (14) nicht aktiviert;
• falls der erfasste Neigungswinkel größer als der Schwellenwinkel ist, werden die Betätigungsmittel (14) durch die elektronische Einheit gesteuert, um die Lage der Schraubringanordnung (8) relativ zum Zwischenabschnitt (7) des Fahrgestells (2) entlang dessen Breitenrichtung (W) um eine ausreichende Menge zu verändern, um ein Umkippen des Arbeitsfahrzeugs (1) zu verhindern.

**11.** Verfahren nach Anspruch 10, wobei die Lage des Schwerpunkts als fester Wert in der elektronischen Einheit gespeichert ist.

**12.** Verfahren nach Anspruch 10, wenn abhängig von Anspruch 11, wobei die Lage des Schwerpunkts in Abhängigkeit von einer gespeicherten Form des Arbeitsfahrzeugs (1) und den Daten bezüglich seines Gewichts verarbeitet wird.

**13.** Verfahren nach den Ansprüchen 10 bis 12, wobei der Schwellenwinkel in der elektronischen Einheit gespeichert ist oder in Abhängigkeit von der aktuellen Schwerpunktlage des Fahrzeugs berechnet wird.

**Revendications**

**1.** Véhicule de travail (1) comprenant un train de roulement (2) mobile par rapport au sol grâce à des moyens de contact avec le sol (4) et un corps principal (3) soutenu de manière mobile par ledit train de roulement (2),

ledit train de roulement comprenant une paire d'éléments latéraux (6) et une partie intermédiaire (7) raccordant lesdits éléments latéraux (6), lesdits éléments latéraux (6) étant espacés de manière égale le long d'un sens transversal (W) par rapport à un plan longitudinal (A) dudit véhicule de travail (1),
ledit véhicule de travail (1) comprenant un ensemble anneau à vis (8) configuré pour permettre une rotation dudit corps principal (3) par rapport audit train de roulement (2) autour d'un axe (B),
ledit véhicule de travail (1) comprenant un ensemble de guidage linéaire (11) intercalé de manière axiale entre ledit ensemble anneau à vis (8) et ladite partie intermédiaire (7) dudit train de roulement et des moyens d'actionnement (14) configurés pour exercer une force dirigée vers ledit ensemble anneau à vis (8) de sorte que ledit ensemble anneau à vis (8) est soutenu de manière mobile et linéaire par rapport audit train de roulement (2) le long dudit sens transversal (W) afin de faire varier l'emplacement dudit axe (B) par rapport audit plan (A) le long du sens transversal (W), dans lequel ledit ensemble de guidage linéaire (11) comprend au moins un guide (12) et un chariot correspondant (13), ledit guide (12) étant soutenu de manière fixe par ladite partie intermédiaire (7) et définissant une trajectoire linéaire le long dudit sens transversal (W), ledit chariot (13) étant soutenu de manière fixe par une partie inférieure (8a) dudit ensemble anneau à vis (8) et configuré pour se déplacer le long dudit guide (12), le véhicule de travail est **caractérisé en ce qu'**il comprend en outre une pluralité de guides (12) et de chariots correspondants (13), lesdits chariots (13) étant logés et fixés dans des sièges correspondants (9) agencés dans ladite partie inférieure (8a) dudit ensemble anneau à vis (8).

2. Véhicule de travail selon la revendication 1, dans lequel ledit chariot (13) est couplé au guide respectif (12) par l'intermédiaire d'un système sphérique de recirculation.

3. Véhicule de travail selon l'une quelconque des revendications précédentes, dans lequel lesdits moyens d'actionnement (14) exercent leur force sur ledit chariot (13).

4. Véhicule de travail selon l'une quelconque des revendications précédentes, dans lequel lesdits moyens d'actionnement (14) comprennent des moyens d'actionnement hydraulique.

5. Véhicule de travail selon l'une quelconque des revendications précédentes, dans lequel lesdits moyens d'actionnement (14) comprennent un vérin hydraulique à double effet (15).

6. Véhicule de travail selon la revendication 5, dans lequel ledit vérin hydraulique à double effet (15) comprend une pluralité de tiges (15b) agissant sur un seul chariot (13).

7. Véhicule de travail selon l'une quelconque des revendications précédentes, comprenant des moyens d'actionnement (14) de part et d'autre dudit ensemble anneau à vis (8) par rapport audit plan longitudinal (A).

8. Véhicule de travail selon l'une quelconque des revendications précédentes comprenant des moyens de détection (16) configurés pour détecter des données relatives à une inclinaison dudit véhicule de travail (1) par rapport à un axe vertical et une unité électronique comprenant des moyens d'élaboration configurés pour acquérir lesdites données d'inclinaison, élaborer ces dernières et commander lesdits moyens d'actionnement (14) en fonction de telles données d'inclinaison élaborées.

9. Véhicule de travail selon la revendication 8 comprenant des moyens de détection configurés pour détecter des données relatives au poids dudit véhicule de travail (1), ladite unité électronique étant configurée pour élaborer la position du centre de gravité dudit véhicule de travail (1) en fonction d'une forme mémorisée dudit véhicule de travail (1) et desdites données relatives à son poids.

10. Procédé pour éviter le renversement d'un véhicule de travail (1) selon la revendication 9 ou la revendication 10 comprenant les étapes suivantes :

• acquisition de données relatives à la position du centre de gravité dudit véhicule de travail (1) ;
• recueil de données relatives à l'inclinaison dudit véhicule de travail (1) par rapport à un axe vertical ;
• comparaison de l'angle d'inclinaison acquis par rapport à un angle de seuil ;
• si l'angle d'inclinaison acquis est inférieur à l'angle de seuil, les moyens d'actionnement (14) ne sont pas activés ;
• si l'angle d'inclinaison acquis est supérieur à l'angle de seuil, les moyens d'actionnement (14) sont commandés par ladite unité électronique pour modifier la position dudit ensemble d'anneaux pivotants (8) par rapport à ladite partie intermédiaire (7) dudit train de roulement (2) le long de son sens transversal (W) dans une quantité suffisante afin d'éviter le renversement dudit véhicule de travail (1).

11. Procédé selon la revendication 10, dans lequel ladite position du centre de gravité est mémorisée comme valeur fixe dans l'unité électronique.

12. Procédé selon la revendication 10 lorsqu'elle dépend de la revendication 11, dans lequel ladite position du centre de gravité est élaborée en fonction d'une forme mémorisée dudit véhicule de travail (1) et desdites données relatives à son poids.

13. Procédé selon les revendications 10 à 12 dans lequel ledit angle de seuil est mémorisé dans ladite unité électronique ou est calculé en fonction de la position actuelle du centre de gravité du véhicule.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190359267 A1
- DE 9319382 U1
- IT 20120027
- US 3160284 A
- US 4679803 A
- LU 37001 A1
- US 2017089797 A1